# EUROPÄISCHE PATENTANMELDUNG

(11) **EP 2 676 826 A2**
(43) Veröffentlichungstag der Anmeldung: **25.12.2013**
(21) Anmeldenummer: 13172689.5
(22) Anmeldetag: 19.06.2013
(51) Int. Cl.: B60J 11/08, B60J 11/06

(54) **Abdeckung für ein Fahrzeug, Wohnmobil oder dergleichen**

(30) Priorität: 19.06.2012 DE 202012102270 U; 19.06.2012 DE 202012102269 U
(71) Anmelder: Hindermann GmbH & Co. KG, 33129 Delbrück (DE)
(72) Erfinder: Hindermann, Manfred, 33129 Delbrück (DE)
(74) Vertreter: Flötotto, Hubert

(57) **Zusammenfassung**

Die Erfindung betrifft eine Abdeckung (1) für ein Fahrzeug, Wohnmobil oder dergleichen, welche insbesondere den Frontbereich des Fahrzeugs (2) abdeckt, wobei die Abdeckung (1) als Isoliermatte derart zugeschnitten und vernäht, verschweißt oder verklebt bzw. laminiert ist, dass sie einen die Frontscheibe des Fahrzeugs abdeckenden Bereich und jeweils die Scheiben der Fahrertür und der Beifahrerseite abdeckende Seitenbereiche aufweist, und die Abdeckung (1) über die Seitenbereiche an der Fahrertür und der Beifahrerseite spannend auf dem Frontbereich festlegbar ist, wobei der Frontbereich der Isoliermatte zur Freigabe der Frontscheibe herunterschwenkbar ist. Gemäß der Weiterbildung wird vorgeschlagen,
dass der Frontbereich (3) als Frontklappe (7) auf der Frontscheibe (4) ausgebildet ist, die in einem an der Isoliermatte vorgesehenen Rahmen (8) schwenkbar angeordnet ist.

## Beschreibung

### Technisches Umfeld

Die Erfindung betrifft eine Abdeckung für ein Fahrzeug, Wohnmobil oder der-gleichen, welche insbesondere den Frontbereich des Fahrzeugs abdeckt, wobei die Abdeckung als Isoliermatte derart zugeschnitten und vernäht, verschweißt oder verklebt beziehungsweise laminiert ist, dass sie einen die Frontscheibe des Fahrzeugs abdeckenden Bereich und jeweils die Scheiben der Fahrertür und der Beifahrerseite abdeckende Seitenbereiche aufweist, und die Abdeckung über die Seitenbereiche an der Fahrertür und der Beifahrerseite spannend auf dem Frontbereich festlegbar ist, wobei der Frontbereich der Isoliermatte zur Freigabe der Frontscheibe herunterschwenkbar ist.

### Stand der Technik

Aus dem Stand der Technik sind Abdeckungen für Fahrzeuge, und hier auch insbesondere für Wohnmobile bekannt, die derart ausgestaltet sind, dass sie bei Wohnmobilen die Fahrerkabine verkleiden. Derartige Abdeckungen wer-den vornehmlich dazu benutzt, dass das Fahrzeug in diesem Bereich beispielsweise vor Verschmutzungen zu schützen ist, wenn das Fahrzeug beispielsweise im Winterlager oder auf Campingplätzen abgestellt wird. Eine andere Möglichkeit der Nutzung dieser Abdeckung zeichnet sich auch dadurch aus, dass sie als zusätzliche äußere Isolierung gegen Kälte genutzt werden kann, oder insbesondere Sonneneinstrahlungen aus dem Innenraum abzuhalten, um auf diese Weise eine Innenerwärmung des Fahrzeugs zu unterbinden.

Bei den bekannten Abdeckungen handelt es sich zum größten Teil um sogenannte zugeschnittene flächige, einteilige oder mehrteilige Planen, die entsprechend über das Fahrzeug im Frontbereich gelegt werden oder aber sie werden über das Fahrzeughaus beziehungsweise die Fahrerkabine mit Spanngurten festgelegt, um so auf diese Weise einen festen Halt der Abdeckung zu erzielen, dass sie beispielsweise einem Sturm oder einem Unwetter standhalten.

Eine derartige Abdeckung ist beispielsweise aus der DE 20 2008 007 538 bekannt, wobei die Abdeckung über einen Frontbereich verfügt, der herunterschwenkbar ausgebildet ist, so dass die Frontscheibe frei ist, um beispielsweise das Fahrzeug im abgedeckten Zustand der Abdeckung verfahren zu können oder aber auch, um dem Innenraum einen Lichteinlass zu gewähren. Bei dem nach der Stand der Technik bekannten Abdeckung mit herunterschwenkbarem Frontbereich wird es als nachteilig angesehen, dass der Frontbereich in der Einbindung der Abdeckung nicht die hinreichende Verbundwirkung aufweist, weil beim Herunterschwenken des Frontbereichs das Gesamtgebilde der Abdeckung beeinträchtigt wird.

Bei der Abdeckung gemäß des Standes der Technik kann ein Seitenbereich, der an seiner Rückseite beispielsweise eine dreiecksförmige Tasche hat, zunächst an der Fahrertür im geöffneten Zustand diese um die Tür gezogen, so dass auf der einen Seite ein Halt für die Abdeckung geschaffen wird. Der andere Seitenbereich wird dann auf der Beifahrerseiteseite festgelegt, wobei dies mit Druckknöpfen, aber auch mit Spanngurten vorgenommen wird, die wiederum an, an der Außenwand des Fahrzeugs angebrachten Halterungen festgelegt wird.

Als nachteilig bei dieser Art der bekannten Abdeckung wird es angesehen, dass die spannende Festlegung der Abdeckung auf der Beifahrerseite oft nicht den hinreichenden Halt gewährleistet, wobei an der Außenhaut des Fahrzeugs Eingriffe vorgenommen werden müssen, um hier die hinreichenden Halte- und Zurrpunkte vorzusehen.

### Aufgabe

Der Erfindung stellt sich somit das Problem, eine Abdeckung für ein Fahrzeug, Wohnmobil oder dergleichen derart weiterzubilden, bei der ein herunterschwenkbarer Frontbereich wesentlich besser in das Gesamtgefüge der Abdeckung eingefasst ist, wobei zusätzlich der Frontbereich auch die Fixierung von Sichtschutz- oder Sonnenschutzgeweben ermöglicht, und wobei auch gefordert wird, dass die Abdeckung eine leichte, schnell zugängliche, spannende Festlegung gewährleistet, wobei konstruktive Eingriffe am Fahrzeug unterbunden werden sollen.

### Lösung

Erfindungsgemäß wird das Problem mit den Merkmalen des Anspruchs 1 und 8 gelöst, vorteilhafte Ausgestaltungen der Erfindung ergeben sich aus den rückbezogen Unteransprüchen.

Die mit der Erfindung erreichten Vorteile bestehen nun darin, dass der Frontbereich als Klappe ausgebildet ist, die insbesondere in einem an der Abdeckung vorgesehenen Rahmen eingebunden ist, was die Handhabbarkeit und Funktionsweise des Frontbereichs wesentlich verbessert. Dabei ist die zu öffnende Frontklappe der Matte in der Höhe begrenzt und erhält beidseitig eine Grifflasche für eine leichtere Bedienung, so dass auch kleinere Personen leicht und einfach von der Frontseite des Fahrzeugs her die Klappenfunktion durchführen kann. Dabei liegt das Oberteil der Frontklappe im geschlossenen Zustand unter einer Überlappung, so dass Wasser und Schnee über den Frontbereich der Abdeckung gut abfließen können.

Erfindungsgemäß wird daher vorgeschlagen, dass der Frontbereich als Frontklappe auf der Frontscheibe ausgebildet ist, die in einem an der Isoliermatte vorgesehenen Rahmen schwenkbar angeordnet ist. Dabei wird der Rahmen von der oberen und der unteren Längsseite begrenzt, wobei die obere Längsseite ein die Frontscheibe im oberen Bereich teilweise abdeckendes Streifenelement umfasst und die untere Längsseite im unteren Bereich der Abdeckung einen Faltenkantenstreifen für die Frontklappe bildet, wobei die Querseiten des Rahmens die Kanten der Seitenbereiche der Abdeckung umfassen.

Nach einer besonders vorteilhaften Ausgestaltung der Erfindung ist dabei in dem Rahmen eine Sonnenschutzmatte, insbesondere Screenmatte fixierbar. Um insbesondere eine bündige, wassergeschützte Klappe in dem Rahmen vorzusehen, überlappt in dem oberen Bereich ein teilweise abdeckendes Streifenelement im geschlossenen Zustand der Frontklappe die obere Front-klappenkante. Zur Bedienung der Frontklappe ist zumindest an einem der oberen Eckbereiche der Frontklappe eine Lasche zum Öffnen vorgesehen, die aufgrund der Höhe des Fahrzeugs besser zugänglich ist. In Weiterbildung der Erfindung sind zumindest an den Querseiten des Rahmens Hakenbänder zur Bereitstellung eines Klettverschlusses vorgesehen, wobei auf der Rückseite der Frontklappe entsprechende Flauschbänder vorgesehen sind. Weitere Vorteile ergeben sich daraus, dass im Bereich der spannenden Seite Haftelemente vorgesehen werden, die ein spannendes Fixieren der Abdeckung über den Gesamtbereich der Frontscheibe gewährleisten, wobei diese die Außenhaut des Fahrzeugs nicht beschädigen.

Erfindungsgemäß wird hierzu vorgeschlagen, dass zur spannenden Festlegung der Abdeckung an einer der Türen oder Fenster, vorzugsweise der Beifahrerseite, Haftelemente am Seitenbereich vorgesehen sind, welche in den Seitenbereich der Abdeckung eingefasst sind, um an der Außenwand und/oder der Scheibe des Fahrzeugs selbsthaftend ansetzbar sind. Hierzu wird beispielsweise als Haftelement vorgeschlagen, dass diese aus Vakuumsaugern bestehen können, wobei diese im Seitenbereich integriert sind in Höhe der Scheibe, so dass ein schnelles und haftendes, spannendes Anbringen des Seitenbereichs an der Scheibe vorgenommen werden kann. Die Vakuumsauger sind hierbei mit ihrem Spannhebel an der Außenseite des Seitenbereichs angeordnet. Als weiteres Haftelement wird nach der Erfindung vorgeschlagen, dass diese aus Magneten bestehen, welche mit Metallgegenstücken an der Innenseite der Scheibe zusammenwirken. Auch diese lassen sich leicht und einfach an dem Scheibenbereich ansetzen, wobei die Magnete an der Innenseite des Seitenbereichs in Taschen ortsfest eingebunden sind, wobei dann von der Innenseite der Beifahrerseite in einfacher Weise ein Metallgegenstück aus abgewinkeltem Blechstreifen angesetzt werden kann. An dem abgewinkelten Bereich des Blechstreifens ist ein Sauger angeordnet, der in einfacher Weise an der Scheibeninnenseite, dort wo der Magnet von der Außenseite her in der Tasche der Abdeckung vorgesehen ist, angesetzt wird.

Nach einer besonders vorteilhaften Ausgestaltung der Erfindung sind die aus Vakuumsauger und Magneten bestehenden Haftelemente auch in Kombination an der Außenwand und/oder der Scheibe ansetzbar.

Nach einer besonders vorteilhaften Ausgestaltung der Erfindung umfassen die Haftelemente Kederschienen, welche vorzugsweise rechtwinkelig zueinander entlang des Seitenfensters vorzugsweise auf der Beifahrerseite befestigt sind. In die horizontal angeordnete Kederschiene kann ein Keder eingeführt werden, der mit dem Seitenbereich fest verbunden ist. In der senkrecht angeordneten Kederschiene kann ein Keder eingeführt werden, an dessen Kederfahne ein Klettverschlussband umfassend ein Hakenband oder ein Flauschband befestigt ist. Das entsprechende Gegenstück Haken- oder Flauschband befindet sich entlang der senkrechten Kante des Seitenbereichs der als Isoliermatte ausgebildeten Abdeckung. Will man nun den Seitenbereich festlegen, so wird zunächst an der horizontal verlaufenden Schiene der Keder eingezogen, welcher an der Innenseite der Abdeckung vorgesehen ist, wobei zur spannenden Festlegung dann der senkrecht dazu verlaufende Klettverschluss mit der Kederfahne hergestellt wird, und wobei zunächst die Kederfahne in die Kederschiene eingezogen wird, um dann unter Zugspannung die senkrecht verlaufende Kante des Seitenbereichs auf die Kederfahne zu drücken.

### Beschreibung der Zeichnungen

Ein Ausführungsbeispiel der Erfindung ist in den Zeichnungen rein schematisch dargestellt und wird nachfolgend näher beschrieben. Es zeigt:
- Figur 1: eine perspektivische Darstellung der Abdeckung mit teilweise geöffneter Frontklappe,
- Figur 2: eine weitere perspektivische Darstellung der Abdeckung an einem Wohnmobil mit aufgeklappter Frontklappe und eingesetzter Screen-Matte,
- Figur 3: eine weitere perspektivische Darstellung der Abdeckung einer zweiten Ausführungsform an einem Wohnmobil mit aufgeklappter Frontklappe und
- Figur 4: eine geschnittene Seitenansicht der Frontklappe gemäß der Erfindung.
- Figur 5: eine perspektivische Darstellung der Abdeckung an einem Wohnmobil gemäß der Erfindung im geöffneten Zustand der Frontklappe,
- Figur 6: eine weitere Darstellung des Seitenbereichs in einer geschnittenen Darstellung, hier des Vakuumsaugers,
- Figur 7: eine weitere geschnittene Darstellung der Abdeckung in Seitenansicht mit dem Haftelemente eines Magneten sowie in Einzeldarstellung des Metallgegenstücks und
- Figur 8: eine weitere perspektivische Darstellung eines Fahrzeugs im Seitenbereich mit den entsprechend angebrachten Kederschienen.

### Ausführungsbeispiele

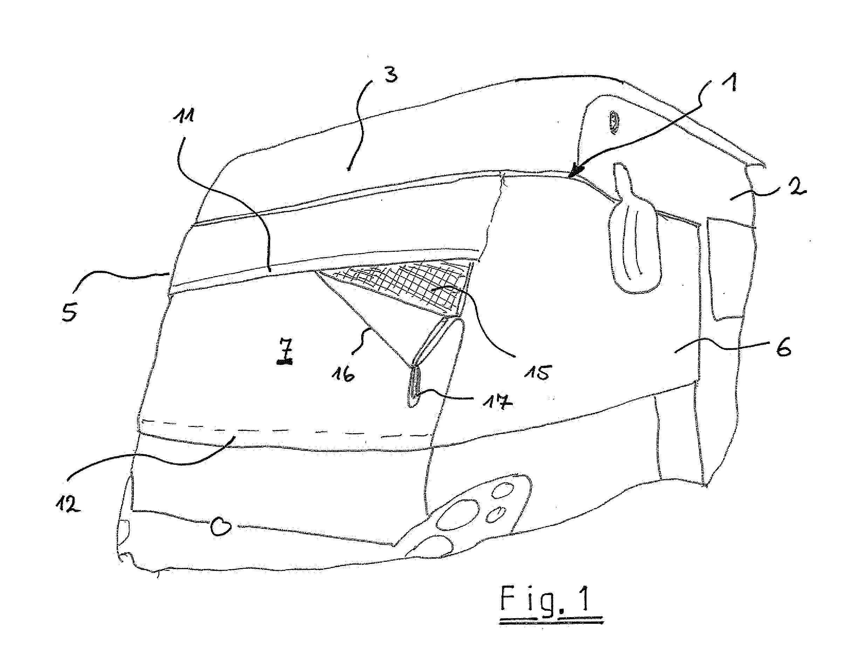

Die Figur 1 zeigt eine Abdeckung 1 für ein Fahrzeug 2 wie beispielsweise ein Wohnmobil oder dergleichen in einer ersten Ausführungsform. Die Abdeckung 1 deckt dabei insbesondere den Frontbereich 3 des Fahrzeugs 2 ab. Die Abdeckung 1 ist als Isoliermatte derart zugeschnitten und vernäht beziehungsweise laminiert, dass sie einen die Frontscheibe 4 des Fahrzeugs 2 abdeckenden Bereich und jeweils die Scheiben der Fahrertür und der Beifahrertür abdeckende Seitenbereiche 5 und 6 aufweist. Die Abdeckung 1 wird über die Seitenbereiche 5 und 6 an der Fahrertür und der Beifahrertür spannend auf den Frontbereich 3 festgelegt.

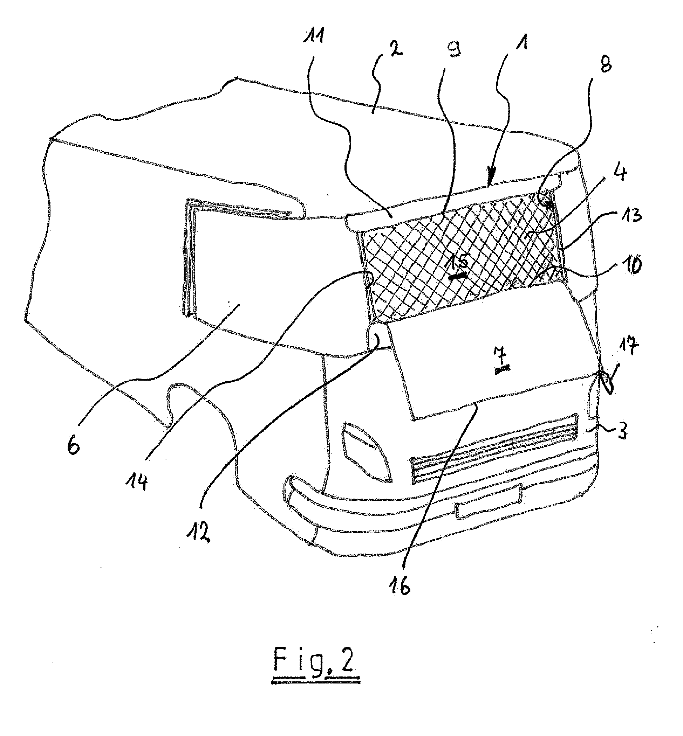

Wie insbesondere aus der Figur 1 und 2 zu erkennen ist, ist der Frontbereich der Isoliermatte zur Freigabe der Frontscheibe 4 herunterschwenkbar angeordnet. Gemäß der Erfindung ist hierbei der Frontbereich 4 als Frontklappe 7 auf der Frontscheibe 4 ausgebildet, die in einem an der Isoliermatte vorgesehenen Rahmen 8 schwenkbar angeordnet ist.

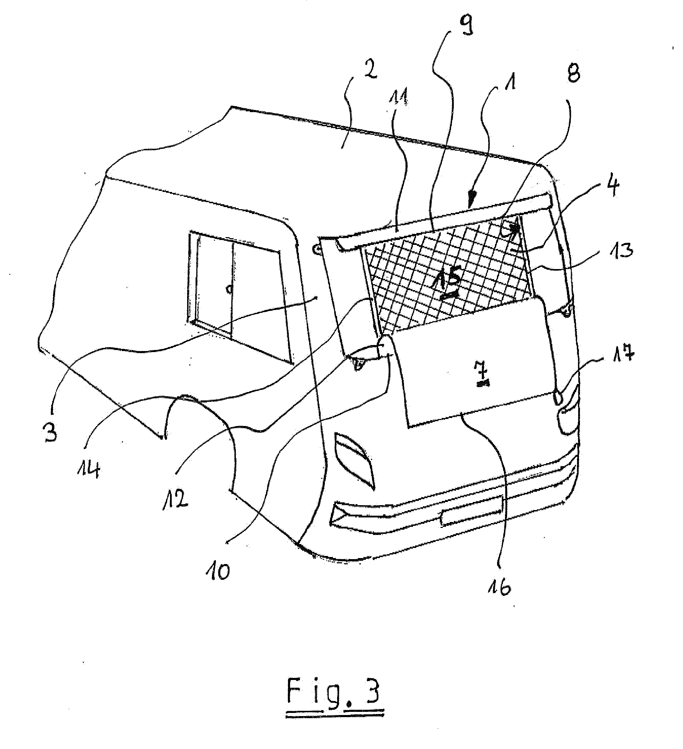

Die Figur 3 zeigt eine weitere zweite Ausführungsform der Erfindung, wobei die Abdeckung 1 sich bei dieser Ausführung auf den Frontbereich 4 des Fahrzeugs 2 beschränkt. Die Abdeckung 1 wird hierbei auf dem Frontbereich 4 verspannt, wobei der Rahmen 8 mit der Frontklappe 7 die Frontscheibe 4 überdeckt.

Wie aus der Figur 2 und der Figur 3 zu erkennen ist, umfassen die Längsseiten 9 und 10 des Rahmens 8 ein die Frontscheibe 4 im oberen Bereich teilweise abdeckendes Streifenelement 11 sowie einen im unteren Bereich angeordneten Faltkantenstreifen 12. Die Querseiten 13 und 14 des Rahmens 8 umfassen die Kanten der Seitenbereiche 5 und 6 der Abdeckung 1. Dabei sind insbesondere die Kanten der Seitenbereiche 5 und 6 als Hakenleisten ausgebildet, wobei an der Unterseite der Frontklappe7 entsprechend zusammenwirkende Flauschbandstreifen angeordnet sind, so dass im hochgeklappten Zustand der Frontklappe 7 insbesondere die Frontklappe 7 dichtend an dem Rahmen 8 anliegt.

Aus der Figur 1 und 2 ist zu erkennen, dass in dem Rahmen 8 eine Sonnenschutzmatte 15, die als Screen-Matte ausgebildet sein kann, fixierbar ist. Somit besteht die Möglichkeit in dem Rahmen 8 auch beispielsweise eine Sichtschutz- oder auch eine Sonnenschutzmatte einzufügen, die unter der hochgeklappten Frontklappe 7 mit in der Abdeckung 1 eingefasst sein kann. Dabei ist es von besonderem Vorteil, dass insbesondere diese Sonnenschutzmatte 15 optional vorgehalten werden kann.

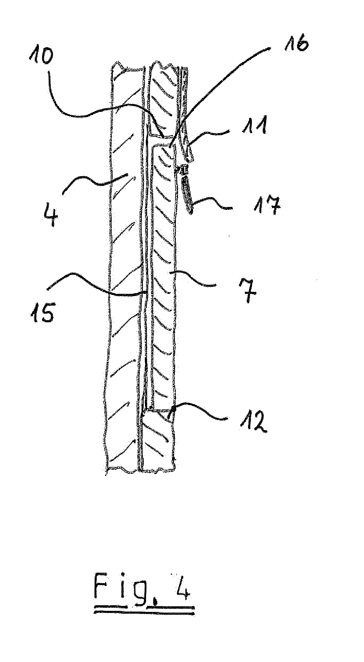

In Weiterbildung der Frontklappe 7, dargestellt in der Figur 4, ist die obere Frontklappenkante 16 im hoch geklappten Zustand der Frontklappe 7 überdeckt von dem im oberen Bereich angeordneten, teilweise abdeckenden Streifenelement 11, so dass durch die Überlappung des Streifenelementes 11 abtropfendes Regenwasser über die Frontklappe 7 abgeleitet werden kann. In Weiterbildung ist dabei zumindest an einem der oberen Eckbereiche der Frontklappe 7 eine Lasche 17 zum Öffnen beziehungsweise zum Schließen der Frontklappe 7 vorgesehen. Wie bereits schon erwähnt, sind zumindest an den Querseiten des Rahmens 8 Hakenbänder zur Bereitstellung eines Klettverschlusses vorgesehen, so dass eine dichtende Anlage der Frontklappe 7 im geschlossenen Zustand an dem Rahmen 8 erreichbar ist.

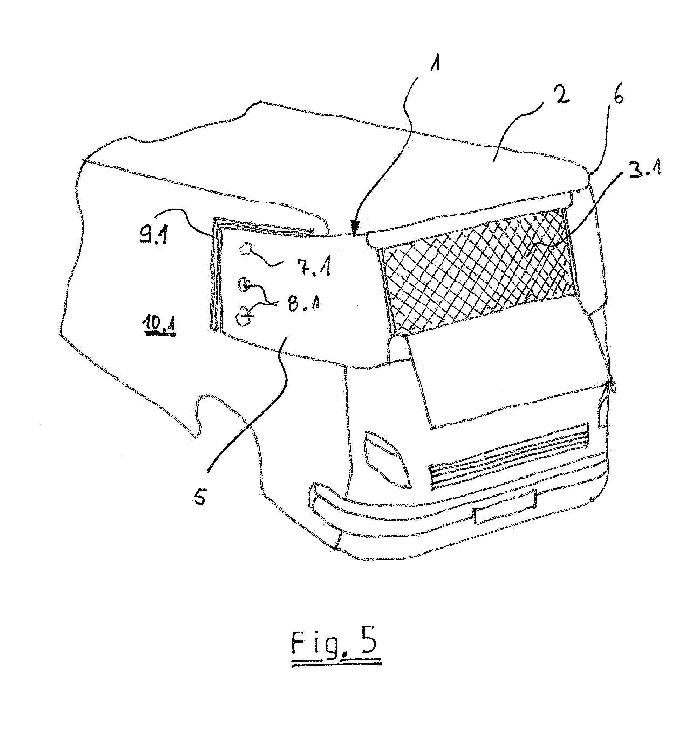

Die Figur 5 zeigt in der perspektivischen Darstellung eine Abdeckung 1 für ein Fahrzeug 2 wie beispielsweise ein Wohnmobil. Die Abdeckung 1 deckt hierbei den Frontbereich des Fahrzeugs 2 ab, wobei die Abdeckung 1 als Isoliermatte derart zugeschnitten und vernäht beziehungsweise laminiert ist, dass sie einen die Frontscheibe 3.1 des Fahrzeugs 2 abdeckenden Bereich und jeweils die Scheiben 4.1 der Fahrer- und der Beifahrerseite abdeckende Seitenbereich 5 und 6 aufweist. Die Abdeckung 1 ist hierbei über die Seitenbereiche 5 und 6 an der Fahrertür und der Beifahrerseite spannend auf dem Frontbereich fest gelegt.

Dabei kann der Seitenbereich 6 an der Fahrertür, nicht näher dargestellt, eine an der Rückseite der Abdeckung 1 angeordnete Tasche aufweisen, welche beim Ansetzen der Abdeckung 1 über den Eckbereich der Fahrertür im geöffneten Zustand gezogen wird, so dass dieser Bereich dann deckend an der Fahrertür anliegt. Um die Abdeckung 1 dann auf der Beifahrerseite festzulegen, wird die Fahrertür geschlossen, so dass eine spannende Anbringung der Abdeckung 1 gegeben ist.

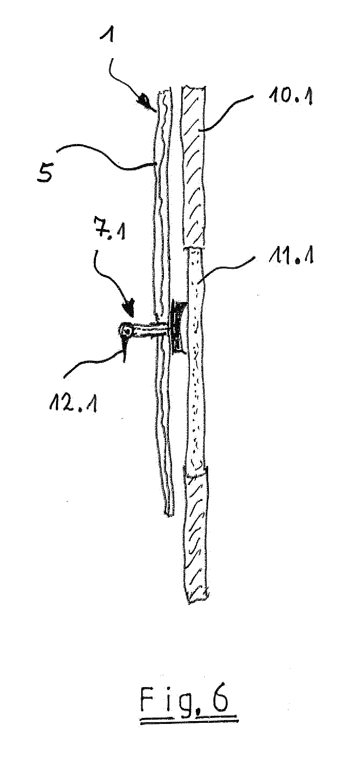

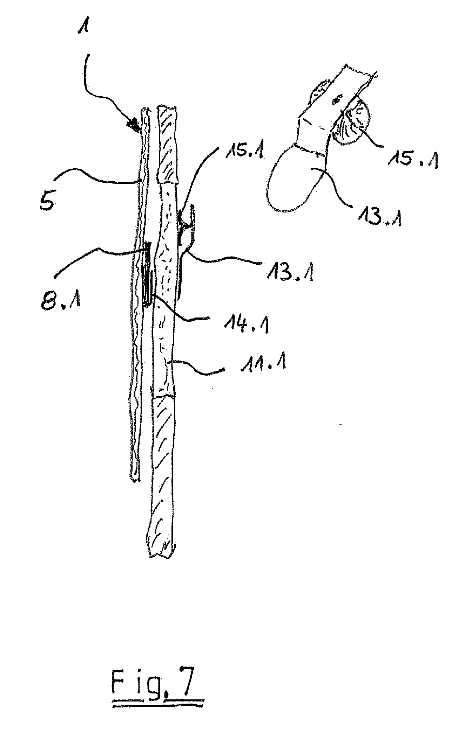

Erfindungsgemäß wird hierzu vorgeschlagen, dass zur spannenden Festlegung der Abdeckung 1 an einer der Türen, vorzugsweise der Beifahrerseite, Haftelemente 7.1, 8.1 und 9.1, wie sie beispielsweise näher in den Figuren 2, 3 und 4 gezeigt sind, am Seitenbereich 5 vorgesehen sind, welche in dem Seitenbereich 5 der Abdeckung 1 eingefasst sind und an der Außenwand 10.1 und/oder der Scheibe 11.1 des Fahrzeugs 2 selbsthaftend ansetzbar sind. Wie beispielsweise in der Figur 6 in der geschnittenen Ansicht dargestellt ist, sind hierbei Haftelemente 7.1 vorgesehen, die aus Vakuumsaugern gebildet sein können. Dabei sind die Vakuumsauger mit ihrem Spannhebel 12.1 auf der Außenseite des Seitenbereichs 5 angeordnet. Als weitere Haftelemente 8.1 können diese aus Magneten bestehen, welche mit Metallstücken 13.1 an der Scheibeninnenseite zusammenwirken. Das Metallgegenstück 13.1 ist hierbei noch einmal exponiert in der Figur 7 dargestellt, wobei die Magnete in an der Innenseite des Seitenbereichs 5 vorgesehenen Taschen 14.1 ortsfest eingebunden sind. Wie insbesondere aus der Detailansicht der Figur 7 zu erkennen ist, bestehen die Metallgegenstücke 13.1 aus abgewinkelten Streifenblechen, wobei an dem abgewinkelten Bereich des Streifenblechs ein Sauger 15.1 angeordnet ist, mit dem der Blechstreifen an der Scheibeninnenseite festgelegt werden kann, wie dies in der geschnittenen Seitenansicht dargestellt ist. Dabei können die aus Vakuumsauger und Magnete bestehenden Haftelemente 7.1 und 8.1 in Kombination an der Außenwand 10.1 und / oder der Scheibe 11.1 angesetzt werden, wie dies in der Figur 5 angedeutet ist.

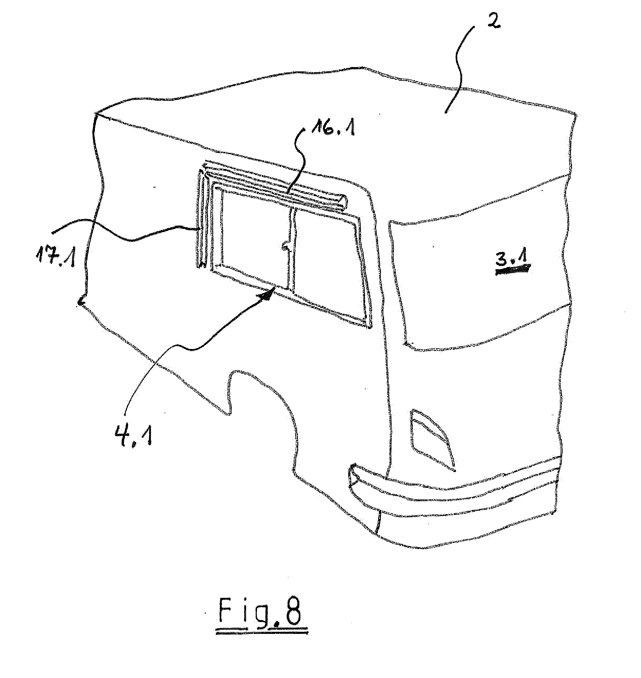

Nach einer besonders vorteilhaften Weiterbildung der Erfindung können auch die Haftelemente 9 aus Kederschienen 16.1 und 17.1 bestehen, welche in einem rechten Winkel zueinander an der Außenwand 10.1 und hier am Seitenfenster des Fahrzeugs 2 befestigt sind, wie dies in der Figur 8 ohne Abdeckung 1 und in der Figur 1 mit Abdeckung 1 veranschaulicht wird. Dabei kann in die Kederschiene 16.1 und 17.1 ein Keder eingezogen werden. In die horizontal angeordnete Kederschiene 16.1 wird ein Keder eingeführt, der mit dem Seitenbereich 5 fest verbunden ist. In der senkrecht angeordneten Kederschiene 17.1 wird eine Kederfahne eingeführt, an der ein Klettverschlussband umfassend ein Hakenband oder ein Flauschband befestigt ist. Das entsprechende Gegenstück Haken- oder Flauschband befindet sich entlang der senkrechten Kante des Seitenbereichs 5 der Isoliermatte. Will man nun den Seitenbereich 5 an den Kederschienen 16.1 und 17.1 festlegen, so wird zunächst an der horizontal verlaufenden Kederschiene 16.1 der Keder eingezogen, welcher an der Innenseite des Seitenbereichs 5 der Abdeckung 1 in der Horizontallage fest vorgesehen ist. Zur spannenden Festlegung wird dann der senkrecht dazu verlaufende Klettverschluss mit der Kederfahne hergestellt, und wobei zunächst die Kederfahne in die Kederschiene 17.1 eingezogen wird, um dann unter Zugspannung die senkrechte verlaufende Kante des Seitenbereichs 5 mit dem Gegenstreifen des Klettverschlusses auf die Kederfahne zu drücken.

### Bezugszeichenliste

- 1: Abdeckung
- 2: Fahrzeug
- 3: Frontbereich
- 4: Frontscheibe
- 5: Seitenbereich
- 6: Seitenbereich
- 7: Frontklappe
- 8: Rahmen
- 9: Längsseite
- 10: Längsseite
- 11: Streifenelement
- 12: Faltkantenstreifen
- 13: Querseite
- 14: Querseite
- 15: Sonnenschutzmatte
- 16: Obere Frontklappenkante
- 17: Lasche
- 3.1: Frontscheibe
- 4.1: Scheiben
- 7.1: Haftelemente
- 8.1: Haftelemente
- 9.1: Haftelement
- 10.1: Außenwand
- 11.1: Scheibe
- 12.1: Spannhebel
- 13.1: Metallstück
- 14.1: Tasche
- 15.1: Sauger
- 16.1: Kederschiene
- 17.1: Kederschiene

## Patentansprüche

1. Abdeckung für ein Fahrzeug, Wohnmobil oder dergleichen, welche insbesondere den Frontbereich des Fahrzeugs abdeckt, wobei die Abdeckung als Isoliermatte derart zugeschnitten und vernäht, verschweißt oder verklebt bzw. laminiert ist, dass sie einen die Frontscheibe des Fahrzeugs abdeckenden Bereich und jeweils die Scheiben der Fahrertür und der Beifahrerseite abdeckende Seitenbereiche aufweist, und die Abdeckung über die Seitenbereiche an der Fahrertür und der Beifahrerseite spannend auf dem Frontbereich festlegbar ist, wobei der Frontbereich der Isoliermatte zur Freigabe der Frontscheibe herunterschwenkbar ist,
**dadurch gekennzeichnet,**
**dass** der Frontbereich (3) als Frontklappe (7) auf der Frontscheibe (4) ausgebildet ist, die in einem an der Isoliermatte vorgesehenen Rahmen (8) schwenkbar angeordnet ist.

2. Abdeckung nach Anspruch 1,
**dadurch gekennzeichnet,**
**dass** der Rahmen (8) eine obere Längsseite (10) aufweist, welche ein die Frontscheibe (4) im oberen Bereich teilweise abdeckendes Streifenelement (11) umfasst, und eine untere Längsseite (11), die im unteren Bereich einen Faltkantenstreifen (12) umfasst.

3. Abdeckung nach Anspruch 1,
**dadurch gekennzeichnet,**
**dass** der Rahmen (8) mit seinen Querseiten (13) und (14) die Kanten der Seitenbereiche (5) und (6) der Abdeckung (1) umfassen.

4. Abdeckung nach Anspruch 1 bis 3,
**dadurch gekennzeichnet,**
**dass** in dem Rahmen (8) eine Sonnenschutzmatte (15) insbesondere Screen-Matte fixierbar ist.

5. Abdeckung nach Anspruch 1 bis 4,
**dadurch gekennzeichnet,**
**dass** das Streifenelement (11) im geschlossenen Zustand der Frontklappe (7) die obere Frontklappenkante (16) überlappt.

6. Abdeckung nach Anspruch 1 bis 5,
**dadurch gekennzeichnet,**
**dass** zumindest an einem der oberen Eckbereiche der Frontklappe (7) eine Lasche (17) zum Öffnen vorgesehen ist.

7. Abdeckung nach Anspruch 1 bis 6,
**dadurch gekennzeichnet,**
**dass** zumindest an den Querseiten (13) und (14) des Rahmens (8) Hakenbänder zur Breitstellung eines Klettverschlusses vorgesehen sind.

8. Abdeckung nach einem oder mehreren der Ansprüche 1 bis 7
**dadurch gekennzeichnet,**
**dass** zur spannenden Festlegung der Abdeckung (1) an einer der Türen, vorzugsweise der Beifahrerseite, Haftelemente (7.1, 8.1 bzw. 9.1) am Seitenbereich (5) vorgesehen sind, welche in dem Seitenbereich (5) der Abdeckung 1 eingefasst sind und an der Außenwand (10.1) und/oder der Scheibe (11.1) des Fahrzeugs (2) selbsthaftend ansetzbar sind.

9. Abdeckung nach Anspruch 8,
**dadurch gekennzeichnet,**
**dass** die Haftelemente (7.1) aus Vakuumsaugern gebildet sind.

10. Abdeckung nach Anspruch 9,
**dadurch gekennzeichnet,**
**dass** die Vakuumsauger mit ihrem Spannhebel (12.1) auf der Außenseite des Seitenbereichs (5) angeordnet sind.

11. Abdeckung nach Anspruch 10,
**dadurch gekennzeichnet,**
**dass** die Haftelemente (8.1) aus Magneten bestehen, welche mit Metallgegenstücken (13.1) an der Scheibeninnenseite zusammenwirken.

12. Abdeckung nach Anspruch 11,
**dadurch gekennzeichnet,**
**dass** die Magnete in an der Innenseite des Seitenbereichs (5) ortsfest eingebunden sind.

13. Abdeckung nach Anspruch 12,
**dadurch gekennzeichnet,**
**dass** die Metallgegenstücke (13.1) vorzugsweise aus abgewinkelten Blechstreifen bestehen.

14. Abdeckung nach Anspruch 13,
**dadurch gekennzeichnet,**
**dass** an dem abgewinkelten Bereich des Blechstreifens ein Sauger (15.1) angeordnet ist zur Festlegung des Blechstreifens an der Scheibeninnenseite.

15. Abdeckung nach Anspruch 8 bis 14,
**dadurch gekennzeichnet,**
**dass** die aus Vakuumsauger und Magnete bestehenden Haftelemente (7.1) und (8.1) in Kombination an der Außenwand (10.1) und/oder der Scheibe (11.1) ansetzbar sind.

16. Abdeckung nach Anspruch 8 bis 15,
**dadurch gekennzeichnet,**
**dass** die Haftelemente (9.1) aus Kederschienen (16.1) und (17.1) gebildet sind, welche vorzugsweise in einem rechten Winkel zueinander an der Außenwand (10.1) des Fahrzeuges (2) befestigt sind, wobei in die horizontal angeordnete Kederschiene (16.1) ein an der Abdeckung (1) ortsfester Keder einziehbar ist, und an der senkrecht angeordneten Kederschiene (17.1) ein an einer Kederfahne vorgesehener Klettverschluss zur spannenden Festlegung herstellbar ist.
